# EUROPÄISCHE PATENTANMELDUNG

(11) **EP 3 118 839 A1**
(43) Veröffentlichungstag der Anmeldung: **18.01.2017**
(21) Anmeldenummer: 16178323.8
(22) Anmeldetag: 07.07.2016
(51) Int. Cl.: G08G 5/00, G08G 5/02

(54) **VERFAHREN ZUR ANZEIGE VON RELEVANTEN INFORMATIONEN IN EINEM LUFTFAHRZEUG**

(30) Priorität: 14.07.2015 AT 506192015
(71) Anmelder: Frequentis AG, 1100 Wien (AT)
(72) Erfinder: Gringinger, Eduard, 1120 Wien (AT)
(74) Vertreter: Wildhack & Jellinek

(57) **Zusammenfassung**

Die Erfindung betrifft ein Verfahren zur Anzeige von relevanten Informationen in einem Luftfahrzeug (3) während des Flugs, wobei vor dem Abflug des Luftfahrzeugs (3) a) eine Anzahl von allgemeinen für den Flugverkehr relevanten Datensätzen (10) in einer Fluginformationsdatenbank (11) zur Verfügung gestellt werden, wobei jeder Datensatz (10) zumindest folgendes umfasst:
- eine Information über ein Ereignis oder einen Zustand, der für die Luftfahrt relevant ist, insbesondere Wetterinformation oder regulatorische Information, vorzugsweise NOTAM,
- einen Ortsbereich, auf den sich die betreffende Information bezieht,
- einen Höhenbereich, auf den sich die betreffende Information bezieht,
- einen Zeitbereich, innerhalb dessen die Information gültig ist, sowie
- optional die Art von Luftfahrzeug (3), für die die Information gültig ist,
b) eine Flugroute (F) vorgegeben wird, die den geplanten zeitlichen, örtlichen und höhenmäßigen Bewegungsverlauf des Luftfahrzeugs (3) angibt, und
c) eine Basismenge von Datensätzen (10) aus der Fluginformationsdatenbank (11) aufgrund einer durch die der vorgegebenen Flugroute (F) festgelegten Erstabfrage (Q) ausgewählt wird,
d) die Basismenge an eine im Luftfahrzeug (3) befindliche Anzeigedatenbank (34), insbesondere lokal über ein lokales Netzwerk oder physisch durch Verwendung eines Datenträgers, übertragen wird, und
wobei während des Flugs des Luftfahrzeugs (3)
e) eine Aktualisierungsabfrage (Q) nach Datensätzen erstellt wird, die ausschließlich nach der Durchführung der Erstabfrage (Q) oder der letzten Aktualisierungsabfrage (Q) in der Fluginformationsdatenbank (11) eingefügt, geändert oder gelöscht wurden,
e) die Aktualisierungsabfrage (Q) von der Fluginformationsdatenbank (11) ausgeführt wird,
f) die aufgrund der Aktualisierungsabfrage (Q) ermittelten Datensätze (10) an eine im Luftfahrzeug (3) befindliche Anzeigedatenbank (34) mittels Funk, insbesondere mittels Satellitenfunk, übertragen werden,
g) die Anzeigedatenbank (34) aufgrund der Datensätze (10) aktualisiert wird, und
h) die Datensätze (10) der Anzeigedatenbank (34) im Luftfahrzeug (3) angezeigt werden. t, die diesen Anzeigeabfragen (Q) genügen.

## Beschreibung

Die Erfindung betrifft ein Verfahren zur Anzeige von relevanten Informationen in einem Luftfahrzeug gemäß dem Oberbegriff des Patentanspruchs 1. Weiters betrifft die Erfindung ein Datenverteilungssystem gemäß dem Patentanspruch 11. Erfindungsgemäße Verfahren und Datenverteilungssysteme werden insbesondere im Bereich der Zivilluftfahrt gewerblich eingesetzt.

Im Bereich der Verteilung luftfahrtrelevanter Informationen besteht das Problem, dass solche Informationen, das sind etwa Wetterinformationen oder regulatorische Informationen wie NOTAM, in Echtzeit auf eine Vielzahl von Luftfahrzeugen verteilt werden müssen. Aufgrund der hierfür zur Verfügung stehenden begrenzten Bandbreite ergeben sich hierbei zu berücksichtigende Übertragungskosten. Üblicherweise wird zur Übertragung von Daten zwischen Bodenstationen und Luftfahrzeugen Satellitenfunk eingesetzt, was verglichen zu einer unmittelbaren Datenübertragung am Boden, z.B. über Austausch von Datenträgern erhebliche Kosten mit sich bringt.

Der Erfindung liegt damit die Aufgabe zugrunde, in einem Luftfahrzeug aktuelle Informationen zur Verfügung zu stellen, die für das jeweilige Luftfahrzeug in seiner konkreten Flugsituation betreffen.

Die Erfindung löst diese Aufgabe mit den Merkmalen des Patentanspruchs 1. Die Erfindung sieht dabei ein Verfahren zur Anzeige von relevanten Informationen in einem Luftfahrzeug während eines Flugs vor, bei dem
a) eine Anzahl von allgemeinen für den Flugverkehr relevanten Datensätzen in einer Fluginformationsdatenbank zur Verfügung gestellt werden, wobei jeder Datensatz zumindest folgendes umfasst:
   - eine Information über ein Ereignis oder einen Zustand, der für die Luftfahrt relevant ist, insbesondere Wetterinformation oder regulatorische Information, vorzugsweise NOTAM,
   - einen Ortsbereich, auf den sich die betreffende Information bezieht,
   - einen Höhenbereich, auf den sich die betreffende Information bezieht,
   - einen Zeitbereich, innerhalb dessen die Information gültig ist, sowie
   - optional die Art von Luftfahrzeug, für die die Information gültig ist,
b) eine Flugroute vorgegeben wird, die den geplanten zeitlichen, örtlichen und höhenmäßigen Bewegungsverlauf des Luftfahrzeugs angibt, und
c) eine Basismenge von Datensätzen aus der Fluginformationsdatenbank aufgrund einer durch die der vorgegebenen Flugroute festgelegten Erstabfrage ausgewählt wird,
d) die Basismenge an eine im Luftfahrzeug befindliche Anzeigedatenbank, insbesondere lokal über ein lokales Netzwerk oder physisch durch Verwendung eines Datenträgers, übertragen wird, und
wobei während des Flugs des Luftfahrzeugs
e) eine Aktualisierungsabfrage nach Datensätzen erstellt wird, die ausschließlich nach der Durchführung der Erstabfrage oder der letzten Aktualisierungsabfrage in der Fluginformationsdatenbank eingefügt, geändert oder gelöscht wurden,
e) die Aktualisierungsabfrage von der Fluginformationsdatenbank ausgeführt wird,
f) die aufgrund der Aktualisierungsabfrage ermittelten Datensätze an eine im Luftfahrzeug befindliche Anzeigedatenbank mittels Funk, insbesondere mittels Satellitenfunk, übertragen werden,
g) die Anzeigedatenbank aufgrund der Datensätze aktualisiert wird, und
h) die Datensätze der Anzeigedatenbank im Luftfahrzeug angezeigt werden.

Durch dieses erfindungsgemäße Verfahren wird erreicht, dass lediglich diejenigen Informationen, die sich seit dem Abflug des Luftfahrzeugs geändert haben, per Satellitenfunk an das Luftfahrzeug übertragen werden müssen, während die übrigen Daten auf einfache Weise etwa über einen Datenträger oder über eine lokale Verbindung zwischen Luftfahrzeug und Bodenstation mit geringen Verbindungskosten übertragen werden können.

Um die Menge der zu aktualisierenden Daten für das jeweilige Luftfahrzeug gering zu halten und dabei die jeweilige Flugphase des Luftfahrzeugs zu berücksichtigen, kann vorgesehen sein, dass während des Flugs des Luftfahrzeugs
- zu vorgegebenen Zeitpunkten Ort und Höhe des Luftfahrzeugs ermittelt wird,
- anschließend abhängig von Ort und Höhe des Luftfahrzeugs, gegebenenfalls von der Zeit, die Aktualisierungsabfrage nach Datensätzen erstellt wird,
   i) die ausschließlich nach Durchführung der Erstabfrage oder der letzten Aktualisierungsabfrage in der Fluginformationsdatenbank eingefügt, geändert oder gelöscht wurden und
   ii) deren zugeordneter Ortsbereich, und gegebenenfalls deren Höhe und/oder Zeitbereich, sich im Bereich der künftigen Flugroute des Luftfahrzeugs oder innerhalb einer Umgebung um das Luftfahrzeug, berechnet ausgehend vom ermittelten Ort und Höhe des Luftfahrzeugs, befinden, und
- Ort und Höhe des Luftfahrzeugs, gegebenenfalls die Zeit, und/oder die Aktualisierungsabfrage an die Fluginformationsdatenbank übermittelt werden.

Eine besonders geringe Datenübertragung zwischen dem Luftfahrzeug und der am Boden befindlichen Datenbank wird erreicht, indem Ort und Höhe des Luftfahrzeugs im Luftfahrzeug ermittelt werden und eine Ort und Höhe des Luftfahrzeugs enthaltende Nachricht mittels Funk, insbesondere mittels Satellitenfunk, übermittelt wird, wobei
a) die Aktualisierungsabfrage im Luftfahrzeug erstellt wird und mittels Funk an die Fluginformationsdatenbank übermittelt wird, oder
b) die Aktualisierungsabfrage von einem mit der Fluginformationsdatenbank, insbesondere lokal, in Datenverbindung stehenden Dispatcher erstellt wird, an den das Luftfahrzeug Ort und Höhe übermittelt.

Zur vorteilhaften Erstellung und Berücksichtigung der jeweiligen Flugphase eines Luftfahrzeugs, mit der eine Vielzahl von Übertragungen von Datensätzen vermieden werden kann, sieht vor, dass im jeweiligen Luftfahrzeug über einen längeren Zeitraum die Höhe ermittelt wird und aus den einzelnen Höhenwerten ein Höhenprofil erstellt wird und dass aus dem Höhenprofil, insbesondere aufgrund der Änderungen der Höhe über die Zeit, ermittelt wird, in welcher Flugphase sich das betreffende Luftfahrzeug befindet und dass abhängig von der jeweiligen Flugphase im Rahmen der Aktualisierungsabfrage ausschließlich nach Datensätzen gefragt wird, die der jeweiligen Flugphase zugeordnet sind oder allgemein gültig sind,
wobei jedem Datensatz ein Datenfeld zugeordnet wird, mit dem festgelegt wird, welcher Flugphase der Datensatz, gegebenenfalls in Abhängigkeit vom weiteren Eigenschaften des Luftfahrzeugs, zugeordnet ist.

Um eine möglichst aktuelle Anzahl von relevanten Datensätzen im jeweiligen Luftfahrzeug zur Verfügung zu haben, kann vorgesehen sein, dass ein mit der Fluginformationsdatenbank, insbesondere lokal, in Datenverbindung stehender Dispatcher, insbesondere laufend, eine Aktualisierungsabfrage nach Datensätzen erstellt, die ausschließlich nach der Durchführung der Erstabfrage oder der letzten Aktualisierungsabfrage in der Fluginformationsdatenbank eingefügt, geändert oder gelöscht wurden.

Durch die Abfrage der Datenbank durch einen lokal mit dieser in Verbindung stehenden Dispatcher kann der Datenbestand im Luftfahrzeug aktuell gehalten werden, wobei gleichzeitig nur ein geringer Datenaustausch zwischen dem Luftfahrzeug und der Datenbank erforderlich ist.

Um Änderungen der vom Luftfahrzeug gewählten Flugroute ohne Beeinträchtigung der Flugsicherheit vornehmen zu können, kann vorgesehen sein, dass während des Flugs
- eine von der erstellten Flugroute abweichende Flugroute erstellt wird, die vom Luftfahrzeug in einer Aktualisierungsabfrage an die Fluginformationsdatenbank mittels Funk, insbesondere mittels Satellitenfunk, übermittelt wird,
- eine aktualisierte Basismenge von Datensätzen aus der Fluginformationsdatenbank aufgrund einer durch die abgeänderte Flugroute festgelegten Abfrage ausgewählt und an eine im Luftfahrzeug befindliche Anzeigedatenbank übertragen wird, und
- die abgeänderte Flugroute die bisherige Flugroute ersetzt und für die weitere Ausführung von Aktualisierungsabfragen zur Verfügung gehalten wird.

Zur Reduktion der zu übertragenden Datensätze kann vorgesehen sein, dass - bei der Erstabfrage oder einer unmittelbar vorangehenden Aktualisierungsabfrage die Basismenge der aufgrund der vorgegebenen Flugroute an das Luftfahrzeug zu übertragenden Datensätze oder Verweise auf diese Datensätze abgespeichert wird, und
- bei der Übermittlung der Basismenge aufgrund einer Aktualisierungsabfrage nur diejenigen Datensätze an das Luftfahrzeug übermittelt werden, die gegenüber der ursprünglichen oder zuletzt geänderten Basismenge unterschiedlich sind, und die Anzeigedatenbank aufgrund der so übermittelten Daten aktualisiert wird, und
- die bisher zur Verfügung stehende Basismenge aufgrund der Aktualisierungsabfrage abgeändert wird.

Um die Übertragung von Datensätzen, die für das betreffende Luftfahrzeug bzw. für die Art des betreffenden Luftfahrzeugs irrelevant sind, zu vermeiden, kann vorgesehen sein, dass vor dem Abflug eines Luftfahrzeugs gemeinsam mit der Flugroute das Luftfahrzeug charakterisierende Luftfahrzeuginformationen abgespeichert werden, wobei für alle an die Fluginformationsdatenbank gerichteten Aktualisierungsabfragen die Einschränkung auf Datensätze vorgenommen wird,
- denen entweder keine Zusatzinformation hinsichtlich der Art von Luftfahrzeugs zugewiesen ist, oder
- deren zugewiesene Art von Luftfahrzeug mit den vorhandenen Luftfahrzeuginformationen übereinstimmt.

Um die Darstellung der Luftverkehrsinformationen im Luftfahrzeug selbst während des Flugs übersichtlich zu gestalten, kann vorgesehen sein, dass während des Flugs unter den in der Anzeigedatenbank vorhandenen Datensätzen aufgrund der ermittelten Position, Höhe und Zeit des Luftfahrzeugs Anzeigeabfragen durchgeführt werden und ausschließlich diejenigen Datensätze angezeigt werden, die diesen Anzeigeabfragen genügen.

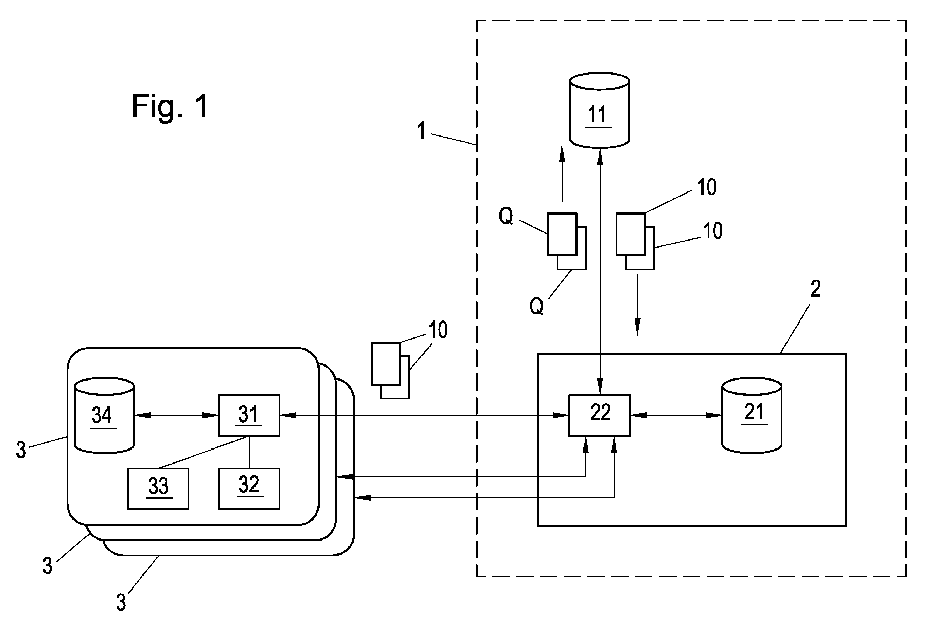

Eine bevorzugte Ausführungsform der Erfindung ist in **Fig. 1** näher dargestellt. Diese zeigt ein Datenverteilungssystem zur Übertragung von Daten von einer Bodenstation an eine Mehrzahl von Luftfahrzeugen.

Das in **Fig. 1** dargestellte Datenverteilungssystem umfasst eine Bodenstation 1, die eine Fluginformationsdatenbank 11 umfasst. Diese Fluginformationsdatenbank 11 kann unterschiedliche Tabellen aufweisen. In der Fluginformationsdatenbank 11 wird eine Anzahl von Datensätzen 10 zur Verfügung gehalten, die für die Luftfahrt relevante Informationen enthalten. Die Fluginformationsdatenbank 11 ist an einen Dispatcher 22 angeschlossen, der mit den einzelnen Luftfahrzeugen 3 mittels Funk, insbesondere Satellitenfunk, in Funkverbindung steht. Die einzelnen Luftfahrzeuge 3 verfügen über eine Sende- und Empfangseinheit 31, mit der sie Daten an den Dispatcher 22 senden können und mit der sie vom Dispatcher 22 übertragene Daten empfangen können.
Jeder der Datensätze 10 der Fluginformationsdatenbank 11 umfasst dabei zumindest die folgenden Informationen:
- eine Information über ein Ereignis oder einen Zustand, der für die Luftfahrt relevant ist. Hierbei kann es sich um unterschiedliche Arten von Informationen handeln, wie z.B. Wetterinformationen oder Informationen regulatorischer Natur wie beispielsweise NOTAM. Dieses Datenfeld des Datensatzes 10 bezeichnet die konkrete Art der dem Datensatz 10 zugrunde liegenden Information.
- Der Datensatz 10 umfasst einen Ortsbereich, auf den sich die betreffende Information bezieht. Hierbei kann es sich um einen einzelnen Punkt auf der Erdoberfläche handeln, der durch geographische Länge und Breite angegeben ist. Es besteht aber auch die Möglichkeit, dass ein Bereich der Erdoberfläche in dem jeweiligen Datensatz 10 angegeben ist, der beispielsweise durch ein geometrisches Objekt festgelegt wird. Vorteilhafterweise können derartige Bereiche durch die Eckpunkte eines Polygons angegeben werden, das den betreffenden Bereich begrenzt. Die Eckpunkte können wiederum in Form von Geokoordinaten umfassend die geographische Länge und die geographische Breite festgelegt werden.

- Weiters umfasst der jeweilige Datensatz 10 einen Höhenbereich, in dem die jeweilige Information gültig ist. Dieser Höhenbereich kann entweder durch eine fest vorgegebene Höhe, einen zwischen einer maximalen und einer minimalen Höhe festgelegten Höhenbereich oder durch den Höhenbereich oberhalb oder unterhalb einer vorgegebenen Minimal- oder Maximalhöhe festgelegt werden.
- Der Datensatz 10 umfasst optional einen Zeitbereich, innerhalb dessen die Information gültig ist. Der Zeitbereich wird vorteilhafterweise durch eine Beginnzeit und/oder eine Endzeit festgelegt, wobei beide Angaben optional sind. Ist eine lediglich eine Beginnzeit angegeben, so ist der jeweilige Datensatz 10 ab der Beginnzeit unbeschränkt gültig. Sind sowohl Beginn- als auch Endzeit im Datensatz 10 festgelegt, ist dieser nur innerhalb dieses Zeitbereichs gültig.
- Optional kann dem Datensatz 10 noch die Art von Luftfahrzeug 3 zugewiesen werden, auf die sich die jeweilige Information bezieht. So kann beispielsweise im Datensatz 10 angegeben werden, dass sich die jeweilige Information ausschließlich auf Luftfahrzeuge einer bestimmten Klasse bzw. mit einer bestimmten Berechtigung bezieht oder dass sich die Information auf Luftfahrzeuge bezieht, die eine Mindest- oder Höchstflügelspannweite haben.
- Schließlich kann im jeweiligen Datensatz 10 noch angegeben werden, ob die im Datensatz 10 verkörperte Information nur für bestimmte Flugphasen des Luftfahrzeugs 3 relevant ist, beispielsweise ob die Information ausschließlich für das Rollen am Boden, den Start des Luftfahrzeugs 3, den Steigflug des Luftfahrzeugs 3, den Reiseflug des Luftfahrzeugs 3, den Anflug des Luftfahrzeugs 3 oder die Landung des Luftfahrzeugs 3 relevant ist.

Die betreffenden Informationen, die in den Datensätzen 10 verkörpert sind, werden der Fluginformationsdatenbank 11 von diversen externen Fällen, wie beispielsweise Wetterdiensten, Luftverkehrsbehörden oder anderen Datenprovidern zur Verfügung gestellt. Die Luftverkehrsdatenbank 11 wird regelmäßig anhand der neu erstellten Datensätze aktualisiert.

Bevor ein Luftfahrzeug 3 abfliegt, wird für dieses eine Flugroute F vorgegeben, die den geplanten zeitlichen, örtlichen und höhenmäßigen Bewegungsverlauf des Luftfahrzeugs 3 vorab angibt. Diese Angabe kann vorteilhafterweise derart erfolgen, dass ein vorgegebener Pfad, auf dem sich das jeweilige Luftfahrzeug 3 voraussichtlich bewegen wird, vorgegeben wird. Darüber hinaus wird jedem einzelnen der Wegpunkte auf dem Pfad ein Zeitpunkt zugeordnet, zu dem sich das betreffende Luftfahrzeug am jeweiligen Wegpunkt befindet. Die Punkte auf dem Pfad können jeweils durch die geographische Länge, die geographische Breite sowie die geplante Flughöhe festgelegt werden. Selbstverständlich ist es nicht möglich, die genaue Flugroute F und Fluggeschwindigkeit des Luftfahrzeugs vorab korrekt vorzugeben, da Abweichungen während des Flugs beispielsweise aufgrund von Wettereinflüssen oder aufgrund anderer Luftfahrzeuge zu Änderungen der geplanten Flugroute F führen können. Aus diesem Grund wird um diese betreffende Flugroute F herum ein Toleranzbereich festgelegt, der mögliche Abweichungen der Flugroute F angibt.

Vor dem Abflug des Luftfahrzeugs 3 wird aus der Fluginformationsdatenbank 11 eine Basismenge von Datensätzen 10 ausgewählt. Zu diesem Grund wird eine Erstabfrage Q erstellt, die sich an der vorgegebenen Flugroute F des Luftfahrzeugs 3 orientiert. So kann beispielsweise eine Basismenge an Datensätzen 10 derart ausgewählt werden, dass sämtliche Datensätze 10 in die Basismenge aufgenommen werden, deren zugeordneter Orts- und Höhenbereich räumlich und zeitlich mit der vorgegebenen Flugroute F übereinstimmt und zumindest teilweise mit dieser Flugroute F überlappt. Die Erstabfrage Q wird auf die Fluginformationsdatenbank 11 angewendet, die Fluginformationsdatenbank 11 liefert aufgrund dieser der Erstabfrage Q eine Basismenge, die an eine im Luftfahrzeug 3 befindliche Luftfahrzeugsdatenbank 34 übertragen wird. Diese Übertragung findet vorteilhafterweise lokal statt, das heißt das Luftfahrzeug 3 steht mit der Fluginformationsdatenbank 11 in Netzwerkverbindung oder die Basismenge wird auf die betreffende Luftfahrzeugsdatenbank 34 durch Verwendung eines Datenträgers übertragen, dh eine Person lädt die Basismenge auf den Datenträger, bringt diesen Datenträger in das Luftfahrzeug 3 und spielt die auf dem Datenträger befindlichen Datensätze 10 in die Luftfahrzeugsdatenbank 34 ein.

Nach der Übertragung dieser Basismenge an Datensätzen 10 startet das Luftfahrzeug 3. Während des Flugs werden unter den in der Luftfahrzeugdatenbank 34 vorhandenen Datensätzen aufgrund der ermittelten Position Höhe und Zeit des Luftfahrzeugs Abfragen Q durchgeführt. Dabei werden auf einer im Luftfahrzeug 3 befindlichen Anzeigeeinheit 33 ausschließlich diejenigen Datensätze 10 angezeigt, die diesen Abfragen genügen. Beispielsweise ist es möglich, rund um die aktuelle Position und Höhe des Luftfahrzeugs 3 eine vorgegebene geometrische Struktur zu legen, die einen Bereich festlegt, innerhalb dessen sich das Luftfahrzeug 3 in absehbarer Zeit befinden wird. In einem bevorzugten Ausführungsbeispiel der Erfindung werden ausschließlich Informationen aus diesem festgelegten Bereich auf der Anzeigeeinheit 33 im Luftfahrzeug 3 angezeigt.

Wie bereits eingangs erwähnt, besteht die Möglichkeit, dass sich die in der Fluginformationsdatenbank 11 abgespeicherten Datensätze 10 während des Flugs des Luftfahrzeugs 3 ändern, das heißt, dass diese Datensätze um weitere Datensätze 10 ergänzt werden, dass die Datensätze modifiziert werden oder dass diese Datensätze 10 gelöscht werden. Um auch während des Flugs auf Änderungen, Ergänzungen oder Löschungen dieser Datensätze 10 reagieren zu können und dem Piloten im betreffenden Luftfahrzeug 3 entsprechende Informationen zukommen zu können, werden, vorzugsweise laufend, Aktualisierungsabfragen Q nach Datensätzen 10 erstellt, die ausschließlich nach der Durchführung der Erstabfrage Q oder nach der jeweils vorangehenden Aktualisierungsabfrage Q in der Luftinformationsdatenbank 11 eingefügt, geändert oder gelöscht wurden. In einem bevorzugten Ausführungsbeispiel der Erfindung umfasst die Aktualisierungsabfrage Q neben der Angabe der ursprünglich festgelegten und bei der Fluginformationsdatenbank 11 hinterlegten Flugroute F zusätzlich Ort und Höhe des Luftfahrzeugs 3. Um die betreffenden Aktualisierungsabfragen zu erstellen, werden Ort und Höhe des Luftfahrzeugs 3 zu vorgegebenen Zeitpunkten, insbesondere in Intervallen ermittelt. Dies kann vorteilhafterweise unmittelbar im Luftfahrzeug 3 selbst geschehen, beispielsweise mittels GPS, sonstiger Navigationsverfahren oder mittels eines Höhenmessinstruments. Eine Nachricht, die Ort und Höhe des Luftfahrzeugs 3 enthält, wird dabei über Satellitenfunk an die Fluginformationsdatenbank 11 übermittelt. Dies kann entweder derart geschehen, dass die Aktualisierungsabfrage Q selbst im Luftfahrzeug 3 erstellt wird und mittels Funk an die Fluginformationsdatenbank 11 übermittelt wird. Alternativ besteht auch die Möglichkeit, dass die Aktualisierungsabfrage Q₂, ..., Qₙ von einer mit der Fluginformationsdatenbank 11 lokal in Verbindung stehenden Dispatcher 22 erstellt wird, an den das Luftfahrzeug 3 Ort und Höhe übermittelt.

Mit der Aktualisierungsabfrage Q wird nach Datensätzen 10 gesucht, die ausschließlich nach Durchführung der Erstabfrage Q oder letzten Aktualisierungsabfrage Q in der Fluginformationsdatenbank 11 eingefügt, geändert oder gelöscht wurden. Unter diesen Datensätzen 10 wird zusätzlich nach denjenigen Datensätzen gesucht, deren zugeordneter Ort und Höhe und/oder Zeitbereich sich im Bereich der künftigen Flugroute F des Luftfahrzeugs 3 ausgehend vom ermittelten Ort und von der ermittelten Höhe des Luftfahrzeugs befinden. Die betreffende Aktualisierungsabfrage Q wird an die Fluginformationsdatenbank 11 übermittelt. Die Fluginformationsdatenbank 11 liefert die der Abfrage genügenden Datensätze und überträgt diese mittels des Dispatchers 22 an das Luftfahrzeug 3. In diesem werden die betreffenden Datensätze 10 an die Luftfahrzeugdatenbank 34 übermittelt, wobei die betreffenden Datensätze 10 gelöscht, geändert oder neu eingefügt werden. Um zu vermeiden, dass das Luftfahrzeug 3 selbst in regelmäßigen Abständen Informationen an die Fluginformationsdatenbank 11 übermitteln muss, kann auch der Dispatcher 22 laufend Aktualisierungsabfragen Q erstellen und ausgehend von der zuletzt durchgeführten Aktualisierungsabfrage Q nach Datensätzen 10 suchen, die ausschließlich nach der Durchführung der zuletzt durchgeführten Aktualisierungsabfrage Q in der Fluginformationsdatenbank 11 eingefügt, geändert oder gelöscht wurden. Auch derart ermittelte Datensätze 10 können anschließend vom Dispatcher 22 an das jeweilige Luftfahrzeug 3 übertragen werden.

Neben der Übertragung der bloßen Höhe des Luftfahrzeugs 3 zu einem vorgegebenen Zeitpunkt kann es für die Bestimmung der Flugphase eines Luftfahrzeugs von Vorteil sein, wenn der Verlauf der Höhe des Luftfahrzeugs 3 über die Zeit - entweder im Luftfahrzeug 3 selbst oder in der Fluginformationsdatenbank 11 oder im Dispatcher 22 aufgezeichnet wird und ausgehend von diesem Höhenprofil die jeweilige Flugphase des Luftfahrzeugs 3 ermittelt wird. Als Flugphasen kommen in Betracht das Fahren des Luftfahrzeugs 3 auf dem Boden, der Start des Luftfahrzeugs, der Steigflug, der Reiseflug, der Sinkflug und die Landung des Luftfahrzeugs. Sämtliche dieser Flugphasen lassen sich durch die charakteristische Form des Höhenprofils des Luftfahrzeugs 3 eindeutig charakterisieren. Abhängig von der ermittelten Flugphase kann die Aktualisierungsabfrage Q auf Datensätze 10 eingeschränkt werden, die entweder unabhängig von der jeweiligen Flugphase allgemein gültig sind oder die nur für die betreffende Flugphase ihre Gültigkeit haben. Datensätze 10, die für eine jeweils andere Flugphase ausschließlich gültig sind, brauchen im Rahmen der Aktualisierungsabfrage Q nicht berücksichtigt zu werden, was zu einer Verringerung der über Satelliten zu übertragenden Daten führt.

Eine besondere Ausführungsform der Erfindung ermöglicht es, die an ein Luftfahrzeug 3 zu übertragenden Datensätze 10 zu verringern, indem die im Luftfahrzeug 3 vorhandenen Datensätze 10 am im Bereich der Bodenstation 1 abgespeichert werden. Bei der Erstabfrage Q wird die Basismenge der aufgrund der vorgegebenen Flugroute F an das Luftfahrzeug 3 zu übertragenden Datensätze 10 oder Verweise auf diese Datensätze 10 in der Fluginformationsdatenbank 11 abgespeichert bzw. zwischengespeichert. Bei der erneuten Übermittlung von Daten von der Bodenstation 1 an das Luftfahrzeug 3 aufgrund einer Aktualisierungsabfrage Q werden nur diejenigen Datensätze 10 an das Luftfahrzeug 3 übermittelt, die gegenüber der ursprünglichen oder zuletzt geänderten Basismenge unterschiedlich sind. Die Luftfahrzeugdatenbank 34 wird aufgrund der so übermittelten Datensätze 10 aktualisiert. Zusätzlich besteht jedoch bei einer derartigen Zwischenspeicherung auch die Möglichkeit, sämtliche Daten, die im Luftfahrzeug 3 zur Verfügung stehen sollten, erneut an das Luftfahrzeug 3 zu übermitteln, um allfällige Ausfälle der Luftfahrzeugdatenbank 34 kompensieren zu können.

Bei einer bevorzugten Weiterbildung der Erfindung besteht zudem die Möglichkeit, vor dem Abflug des Luftfahrzeugs 3 gemeinsam mit der Flugroute F bei der Fluginformationsdatenbank 11 Informationen zu hinterlegen, die das betreffende Luftfahrzeug 3 charakterisieren. Diese Luftfahrzeuginformationen können genutzt werden, um Aktualisierungsabfragen Q oder Erstabfragen Q einzuschränken, wobei für das betreffende Luftfahrzeug 3 selbstverständlich nur diejenigen Informationen relevant sind, denen entweder keine Zusatzinformation hinsichtlich der Art des Luftfahrzeugs 3 zugewiesen ist, oder deren zugewiesene Art von Luftfahrzeug 3 mit den vorhandenen Luftfahrzeuginformationen übereinstimmt.

Eine weitere bevorzugte Ausführungsform der Erfindung ermöglicht die Änderung der Flugroute F während des Flugs durch den Piloten im Luftfahrzeug 3. Zu diesem Zweck ist im Luftfahrzeug 3 eine Auswahleinheit 32 zur Erstellung einer abgeänderten Flugroute F' im Luftfahrzeug 3 vorhanden, die an die Sende- und Empfangseinheit 31 angeschlossen ist und dieser die abweichende Flugroute F' übermittelt. Die Sende- und Empfangseinheit 31 überträgt ihrerseits die abweichende Flugroute F' über den Dispatcher 22 an die Fluginformationsdatenbank 11. Diese erstellt eine aktualisierte Basismenge von Datensätzen 10 aufgrund einer vom Dispatcher 22 erstellten und durch die abgeänderte Flugroute F' festgelegten Abfrage Q. Der Dispatcher erhält die aktualisierte Basismenge und überträgt diese an die im Luftfahrzeug 3 befindliche Anzeigedatenbank 34 überträgt. Weiters ersetzt der Dispatcher 22 die bei ihm in der Flugroutendatenbank 21 abgespeicherte bisherige Flugroute F durch die abgeänderte Flugroute F' und verwendet die abgeänderte Flugroute F' für die weitere Ausführung von Aktualisierungsabfragen Q.

## Patentansprüche

1. Verfahren zur Anzeige von relevanten Informationen in einem Luftfahrzeug (3) während des Flugs, wobei vor dem Abflug des Luftfahrzeugs (3)
a) eine Anzahl von allgemeinen für den Flugverkehr relevanten Datensätzen (10) in einer Fluginformationsdatenbank (11) zur Verfügung gestellt werden, wobei jeder Datensatz (10) zumindest folgendes umfasst:
- eine Information über ein Ereignis oder einen Zustand, der für die Luftfahrt relevant ist, insbesondere Wetterinformation oder regulatorische Information, vorzugsweise NOTAM,
- einen Ortsbereich, auf den sich die betreffende Information bezieht,
- einen Höhenbereich, auf den sich die betreffende Information bezieht,
- einen Zeitbereich, innerhalb dessen die Information gültig ist, sowie
- optional die Art von Luftfahrzeug (3), für die die Information gültig ist,
b) eine Flugroute (F) vorgegeben wird, die den geplanten zeitlichen, örtlichen und höhenmäßigen Bewegungsverlauf des Luftfahrzeugs (3) angibt, und
c) eine Basismenge von Datensätzen (10) aus der Fluginformationsdatenbank (11) aufgrund einer durch die der vorgegebenen Flugroute (F) festgelegten Erstabfrage (Q) ausgewählt wird,
d) die Basismenge an eine im Luftfahrzeug (3) befindliche Anzeigedatenbank (34), insbesondere lokal über ein lokales Netzwerk oder physisch durch Verwendung eines Datenträgers, übertragen wird, und
wobei während des Flugs des Luftfahrzeugs (3)
e) eine Aktualisierungsabfrage (Q) nach Datensätzen erstellt wird, die ausschließlich nach der Durchführung der Erstabfrage (Q) oder der letzten Aktualisierungsabfrage (Q) in der Fluginformationsdatenbank (11) eingefügt, geändert oder gelöscht wurden,
e) die Aktualisierungsabfrage (Q) von der Fluginformationsdatenbank (11) ausgeführt wird,
f) die aufgrund der Aktualisierungsabfrage (Q) ermittelten Datensätze (10) an eine im Luftfahrzeug (3) befindliche Anzeigedatenbank (34) mittels Funk, insbesondere mittels Satellitenfunk, übertragen werden,
g) die Anzeigedatenbank (34) aufgrund der Datensätze (10) aktualisiert wird, und
h) die Datensätze (10) der Anzeigedatenbank (34) im Luftfahrzeug (3) angezeigt werden.

2. Verfahren nach Anspruch 1, **dadurch gekennzeichnet, dass** während des Flugs des Luftfahrzeugs (3)
- zu vorgegebenen Zeitpunkten Ort und Höhe des Luftfahrzeugs (3) ermittelt wird,
- anschließend abhängig von Ort und Höhe des Luftfahrzeugs (3), gegebenenfalls von der Zeit, die Aktualisierungsabfrage (Q) nach Datensätzen (10) erstellt wird,
i) die ausschließlich nach Durchführung der Erstabfrage (Q) oder der letzten Aktualisierungsabfrage (Q) in der Fluginformationsdatenbank (11) eingefügt, geändert oder gelöscht wurden und
ii) deren zugeordneter Ortsbereich, und gegebenenfalls deren Höhe und/oder Zeitbereich, sich im Bereich der künftigen Flugroute (F) des Luftfahrzeugs (3) oder innerhalb einer Umgebung um das Luftfahrzeug (3), berechnet ausgehend vom ermittelten Ort und Höhe des Luftfahrzeugs (3), befinden, und
- Ort und Höhe des Luftfahrzeugs (3), gegebenenfalls die Zeit, und/oder die Aktualisierungsabfrage (Q) an die Fluginformationsdatenbank (11) übermittelt werden.

3. Verfahren nach Anspruch 2, **dadurch gekennzeichnet, dass** Ort und Höhe des Luftfahrzeugs (3) im Luftfahrzeug (3) ermittelt werden und eine Ort und Höhe des Luftfahrzeugs (3) enthaltende Nachricht mittels Funk, insbesondere mittels Satellitenfunk, übermittelt wird, wobei
a) die Aktualisierungsabfrage (Q) im Luftfahrzeug (3) erstellt wird und mittels Funk an die Fluginformationsdatenbank (11) übermittelt wird, oder
b) die Aktualisierungsabfrage (Q) von einem mit der Fluginformationsdatenbank (11), insbesondere lokal, in Datenverbindung stehenden Dispatcher (22) erstellt wird, an den das Luftfahrzeug (3) Ort und Höhe übermittelt.

4. Verfahren nach einem der vorangehenden Ansprüche, **dadurch gekennzeichnet, dass** im jeweiligen Luftfahrzeug (3) über einen längeren Zeitraum die Höhe ermittelt wird und aus den einzelnen Höhenwerten ein Höhenprofil erstellt wird und dass aus dem Höhenprofil, insbesondere aufgrund der Änderungen der Höhe über die Zeit, ermittelt wird, in welcher Flugphase sich das betreffende Luftfahrzeug (3) befindet und dass abhängig von der jeweiligen Flugphase im Rahmen der Aktualisierungsabfrage (Q) ausschließlich nach Datensätzen (10) gefragt wird, die der jeweiligen Flugphase zugeordnet sind oder allgemein gültig sind,
wobei jedem Datensatz (10) ein Datenfeld zugeordnet wird, mit dem festgelegt wird, welcher Flugphase der Datensatz (10), gegebenenfalls in Abhängigkeit vom weiteren Eigenschaften des Luftfahrzeugs, zugeordnet ist.

5. Verfahren nach einem der vorangehenden Ansprüche, **dadurch gekennzeichnet, dass** ein mit der Fluginformationsdatenbank (11), insbesondere lokal, in Datenverbindung stehender Dispatcher (22), insbesondere laufend, eine Aktualisierungsabfrage (Q) nach Datensätzen (10) erstellt, die ausschließlich nach der Durchführung der Erstabfrage (Q) oder der letzten Aktualisierungsabfrage (Q) in der Fluginformationsdatenbank (11) eingefügt, geändert oder gelöscht wurden.

6. Verfahren nach einem der vorangehenden Ansprüche, **dadurch gekennzeichnet, dass** während des Flugs
- eine von der erstellten Flugroute (F) abweichende Flugroute (F') erstellt wird, die vom Luftfahrzeug (3) in einer Aktualisierungsabfrage (Q) an die Fluginformationsdatenbank (11) mittels Funk, insbesondere mittels Satellitenfunk, übermittelt wird,
- eine aktualisierte Basismenge von Datensätzen (10) aus der Fluginformationsdatenbank (11) aufgrund einer durch die abgeänderte Flugroute (F') festgelegten Abfrage (Q) ausgewählt und an eine im Luftfahrzeug (3) befindliche Anzeigedatenbank (34) übertragen wird, und
- die abgeänderte Flugroute (F') die bisherige Flugroute (F) ersetzt und für die weitere Ausführung von Aktualisierungsabfragen (Q) zur Verfügung gehalten wird.

7. Verfahren nach einem der vorangehenden Ansprüche, **dadurch gekennzeichnet, dass**
- bei der Erstabfrage (Q) oder einer unmittelbar vorangehenden Aktualisierungsabfrage (Q) die Basismenge der aufgrund der vorgegebenen Flugroute (F) an das Luftfahrzeug (3) zu übertragenden Datensätze (10) oder Verweise auf diese Datensätze (10) abgespeichert wird, und
- bei der Übermittlung der Basismenge aufgrund einer Aktualisierungsabfrage (Q) nur diejenigen Datensätze (10) an das Luftfahrzeug (3) übermittelt werden, die gegenüber der ursprünglichen oder zuletzt geänderten Basismenge unterschiedlich sind, und die Anzeigedatenbank (34) aufgrund der so übermittelten Daten aktualisiert wird, und
- die bisher zur Verfügung stehende Basismenge aufgrund der Aktualisierungsabfrage (Q) abgeändert wird.

8. Verfahren nach einem der vorangehenden Ansprüche, **dadurch gekennzeichnet, dass** vor dem Abflug eines Luftfahrzeugs (3) gemeinsam mit der Flugroute (F) das Luftfahrzeug (3) charakterisierende Luftfahrzeuginformationen abgespeichert werden, wobei für alle an die Fluginformationsdatenbank (11) gerichteten Aktualisierungsabfragen (Q) die Einschränkung auf Datensätze (10) vorgenommen wird,
- denen entweder keine Zusatzinformation hinsichtlich der Art von Luftfahrzeugs (3) zugewiesen ist, oder
- deren zugewiesene Art von Luftfahrzeug (3) mit den vorhandenen Luftfahrzeuginformationen übereinstimmt.

9. Verfahren nach einem der vorangehenden Ansprüche, **dadurch gekennzeichnet, dass** während des Flugs unter den in der Anzeigedatenbank (34) vorhandenen Datensätzen (10) aufgrund der ermittelten Position, Höhe und Zeit des Luftfahrzeugs (3) Anzeigeabfragen durchgeführt werden und ausschließlich diejenigen Datensätze (10) angezeigt werden, die diesen Anzeigeabfragen genügen.

10. Datenträger, auf dem ein Computerprogramm zur Ausführung eines Verfahrens nach einem der Ansprüche 1 bis 9 abgespeichert ist.

11. Datenverteilungssystem zur Verteilung von relevanten Informationen an zumindest ein Luftfahrzeug (3), mit dem diese Informationen während des Flugs darstellbar sind, wobei
a) eine Fluginformationsdatenbank (11) vorhanden ist, in der eine Anzahl von allgemeinen für den Flugverkehr relevanten Datensätzen (10) abgespeichert sind, wobei jeder Datensatz (10) zumindest folgendes umfasst:
- eine Information über ein Ereignis oder einen Zustand, der für die Luftfahrt relevant ist, insbesondere Wetterinformation oder regulatorische Information, vorzugsweise NOTAM,
- einen Ortsbereich, auf den sich die betreffende Information bezieht,
- einen Höhenbereich, auf den sich die betreffende Information bezieht,
- einen Zeitbereich, innerhalb dessen die Information gültig ist, sowie
- optional die Art von Luftfahrzeug (3), für die die Information gültig ist,
b) ein Speicher für zumindest eine Flugroute (F) für das Luftfahrzeug (3) vorhanden ist, wobei die Flugroute (F) den geplanten zeitlichen, örtlichen und höhenmäßigen Bewegungsverlauf des Luftfahrzeugs (3) angibt,
c) ein Dispatcher (22) vorhanden ist, der für das betreffende Luftfahrzeug (3) eine Basismenge von Datensätzen (10) aus der Fluginformationsdatenbank (11) aufgrund einer durch die der vorgegebenen Flugroute (F) festgelegten Erstabfrage (Q) auswählt, und die Basismenge an eine im Luftfahrzeug (3) befindliche Anzeigedatenbank (34), insbesondere lokal über ein lokales Netzwerk oder physisch durch Verwendung eines Datenträgers, überträgt,
d) der Dispatcher (22) über Funk, insbesondere über Satellitenfunk, mit dem in der Luft befindlichen Luftfahrzeug (3) in Datenverbindung steht und Aktualisierungsabfragen (Q) nach Datensätzen (10) empfängt, die ausschließlich nach der Durchführung der Erstabfrage (Q) oder der letzten Aktualisierungsabfrage (Q) in der Fluginformationsdatenbank (11) eingefügt, geändert oder gelöscht wurden,
e) der Dispatcher (22) die Fluginformationsdatenbank (11) zur Ausführung der die Aktualisierungsabfrage (Q) veranlasst, und
f) der Dispatcher (22) die aufgrund der Aktualisierungsabfrage (Q) ermittelten Ergänzungsdatensätze (10) an das Luftfahrzeug über Funk, insbesondere über Satellitenfunk, überträgt.

12. Datenverteilungssystem ferner umfassend ein Luftfahrzeug (3) mit
a) einer Anzeigedatenbank (34), die die vom Dispatcher (22) übermittelten Datensätze und Ergänzungsdatensätze (10) empfängt und ihren Inhalt aufgrund der Ergänzungsdatensätze (10) aktualisiert, und
b) einer Anzeigeeinheit (33) zur Anzeige der in der Anzeigedatenbank (34) gespeicherten Informationen.

13. Datenverteilungssystem nach Anspruch 12, **dadurch gekennzeichnet,**
- **dass** im Luftfahrzeug (3) eine Positionsgebereinheit zur Bestimmung der Position des Luftfahrzeugs (3) während des Flugs angeordnet ist, die zu vorgegebenen Zeitpunkten Ort und Höhe des Luftfahrzeugs (3) ermittelt,
- **dass** im Luftfahrzeug (3) eine der Positionsgebereinheit nachgeschaltete Sende- und Empfangseinheit (31) vorgesehen ist, die abhängig von Ort und Höhe des Luftfahrzeugs (3), gegebenenfalls von der Zeit, Aktualisierungsabfragen (Q) nach Datensätzen erstellt,
i) die ausschließlich nach Durchführung der Erstabfrage (Q) oder der letzten Aktualisierungsabfrage (Q) in der Fluginformationsdatenbank (11) eingefügt, geändert oder gelöscht wurden und
ii) deren zugeordneter Ort, und gegebenenfalls deren Höhe und/oder Zeitbereich, sich im Bereich der künftigen Flugroute (F) des Luftfahrzeugs (3) oder innerhalb einer Umgebung um das Luftfahrzeug (3), berechnet ausgehend vom ermittelten Ort und Höhe des Luftfahrzeugs, befinden, und
- **dass** die Sende- und Empfangseinheit (31) die Aktualisierungsabfrage (Q) an den Dispatcher (22) zur Weiterleitung an die Fluginformationsdatenbank (11) übermittelt.

14. Datenverteilungssystem nach Anspruch 12, **dadurch gekennzeichnet,**
- **dass** im Luftfahrzeug (3) eine Positionsgebereinheit zur Bestimmung der Position des Luftfahrzeugs (3) während des Flugs angeordnet ist, die zu vorgegebenen Zeitpunkten Ort und Höhe des Luftfahrzeugs (3) ermittelt,
- **dass** im Luftfahrzeug (3) eine der Positionsgebereinheit nachgeschaltete Sende- und Empfangseinheit (31) vorgesehen ist, die Ort und Höhe des Luftfahrzeugs (3), gegebenenfalls die Zeit, mittels Funk an den Dispatcher (22) übermittelt, und
- **dass** der Dispatcher nach dem Empfang eine Aktualisierungsabfrage (Q) an die Fluginformationsdatenbank (11) nach Datensätzen übermittelt,
i) die ausschließlich nach Durchführung der Erstabfrage (Q) oder der letzten Aktualisierungsabfrage (Q) in der Fluginformationsdatenbank (11) eingefügt, geändert oder gelöscht wurden und
ii) deren zugeordneter Ort, und gegebenenfalls deren Höhe und/oder Zeitbereich, sich im Bereich der künftigen Flugroute (F') des Luftfahrzeugs (3) oder innerhalb einer Umgebung um das Luftfahrzeug (3), berechnet ausgehend vom ermittelten Ort und Höhe des Luftfahrzeugs (3), befinden.

15. Datenverteilungssystem nach einem der Ansprüche 11 bis 14, **dadurch gekennzeichnet, dass** im Luftfahrzeug (3) eine Aufzeichnungseinheit zur Aufzeichnung der Höhe des Luftfahrzeugs (3) über einen längeren Zeitraum vorhanden ist, die aus den einzelnen ermittelten Höhenwerten ein Höhenprofil erstellt und aus dem Höhenprofil, insbesondere aufgrund der Änderungen der Höhe über die Zeit, die Flugphase des Luftfahrzeugs (3) ermittelt, in der sich das betreffende Luftfahrzeug (3) befindet,
dass die Aufzeichnungseinheit die jeweils ermittelte Flugphase an die Sende- und Empfangseinheit (31) zur Weiterleitung und Erstellung einer Aktualisierungsabfrage (Q) an die Fluginformationsdatenbank (11) übermittelt,
dass die Fluginformationsdatenbank (11) abhängig von der jeweiligen Flugphase im Rahmen der Aktualisierungsabfrage ausschließlich nach Datensätzen (10) sucht, die der jeweiligen Flugphase zugeordnet sind oder allgemein gültig sind, und
dass jedem Datensatz (10) der Fluginformationsdatenbank (11) ein Datenfeld zugeordnet ist, das festlegt, ob und welcher Flugphase der Datensatz (10), gegebenenfalls in Abhängigkeit vom weiteren Eigenschaften des Luftfahrzeugs, zugeordnet ist.

16. Datenverteilungssystem nach einem der Ansprüche 11 bis 15, **dadurch gekennzeichnet, dass** ein mit der Fluginformationsdatenbank (11), insbesondere lokal, in Datenverbindung stehender Dispatcher (22), insbesondere laufend, eine Aktualisierungsabfrage (Q) nach Datensätzen erstellt, die ausschließlich nach der Durchführung der Erstabfrage (Q) oder der letzten Aktualisierungsabfrage (Q) in der Fluginformationsdatenbank (11) eingefügt, geändert oder gelöscht wurden.

17. Datenverteilungssystem nach einem der Ansprüche 11 bis 16, **dadurch gekennzeichnet, dass** das Luftfahrzeug (3) eine Auswahleinheit (32) zur Einstellung einer von der erstellten Flugroute (F) abweichende Flugroute (F') aufweist, wobei die Sende- und Empfangseinheit (31) die abweichende Flugroute (F') vom Luftfahrzeug (3) über den Dispatcher (22) an die Fluginformationsdatenbank (11) übermittelt,
- die Fluginformationsdatenbank (11) eine aktualisierte Basismenge von Datensätzen (10) aufgrund einer durch die abgeänderte Flugroute (F') festgelegten Aktualisierungsabfrage (Q) auswählt und an die im Luftfahrzeug (3) befindliche Anzeigedatenbank (34) überträgt, und
- der Dispatcher (22) die bei ihm abgespeicherte bisherige Flugroute (F) durch die abgeänderte Flugroute (F') ersetzt und für die weitere Ausführung von Aktualisierungsabfragen (Q) zur Verfügung hält.

18. Datenverteilungssystem nach einem der Ansprüche 11 bis 17, **dadurch gekennzeichnet, dass**
- der Dispatcher (22) bei der Erstabfrage (Q) oder einer unmittelbar vorangehenden Aktualisierungsabfrage (Q) die Basismenge der aufgrund der vorgegebenen Flugroute (F) an das Luftfahrzeug (3) zu übertragenden Datensätze (10) oder Verweise auf diese Datensätze (10) abspeichert, und
- das Dispatcher (22) bei der Übermittlung der Basismenge aufgrund einer Aktualisierungsabfrage (Q) nur diejenigen Datensätze (10) an das Luftfahrzeug (3) übermittelt, die gegenüber der ursprünglichen oder zuletzt geänderten Basismenge unterschiedlich sind, und die Anzeigedatenbank (34) aufgrund der so übermittelten Daten aktualisiert, und
- der Dispatcher (22) die bisher zur Verfügung stehende Basismenge aufgrund der Aktualisierungsabfrage (Q) abändert.

19. Datenverteilungssystem nach einem der Ansprüche 11 bis 18, **dadurch gekennzeichnet, dass** vor dem Abflug eines Luftfahrzeugs (3) im Dispatcher (22) gemeinsam mit der Flugroute (F) das Luftfahrzeug (3) charakterisierende Luftfahrzeuginformationen abgespeichert vorliegen,
dass der Dispatcher (22) für alle in die Fluginformationsdatenbank (11) gerichteten Aktualisierungsabfragen (Q) und/oder Aktualisierungsabfragen (Q) die Einschränkung auf Datensätze vornimmt,
- denen entweder keine Zusatzinformation hinsichtlich der Art von Luftfahrzeug (3) zugewiesen ist, oder
- deren zugewiesene Art von Luftfahrzeug (3) mit den vorhandenen Luftfahrzeuginformationen übereinstimmt.

20. Datenverteilungssystem nach einem der Ansprüche 11 bis 19, **dadurch gekennzeichnet, dass** die Anzeigeeinheit (33) während des Flugs unter den in der Anzeigedatenbank (34) vorhandenen Datensätzen aufgrund der ermittelten Position, Höhe und Zeit des Luftfahrzeugs Anzeigeabfragen (Q) durchführt und ausschließlich diejenigen Datensätze anzeigt, die diesen Anzeigeabfragen (Q) genügen.
